# EUROPÄISCHE PATENTSCHRIFT

(11) **EP 3 853 107 B1**
(45) Veröffentlichungstag und Bekanntmachung des Hinweises auf die Patenterteilung: **12.04.2023**
(21) Anmeldenummer: 19766232.3
(22) Anmeldetag: 10.09.2019
(51) Int. Cl.: B62D 1/181, B62D 5/00, B62D 1/185

(54) **LENKSÄULE UND STEER-BY-WIRE LENKSYSTEM**
STEERING COLUMN AND STEER-BY-WIRE STEERING SYSTEM
COLONNE DE DIRECTION ET SYSTÈME DE DIRECTION À COMMANDE PAR CÂBLE

(30) Priorität: 17.09.2018 DE 102018122767
(43) Veröffentlichungstag der Anmeldung: 28.07.2021
(73) Patentinhaber: thyssenkrupp Presta AG, 9492 Eschen (LI); thyssenkrupp AG, 45143 Essen (DE)
(72) Erfinder: BAYER, Tim, 9450 Lüchingen (CH); BLÄTTLER, Simon, 9472 Grabs (CH); HEITZ, Thomas Werner, 9493 Mauren (LI); KREUTZ, Daniel, 6800 Feldkirch (AT)
(74) Vertreter: thyssenkrupp Intellectual Property GmbH
(86) Internationale Anmeldenummer: PCT/EP2019/074021
(87) Internationale Veröffentlichungsnummer: WO 2020/058025

(56) Entgegenhaltungen:
- WO-A1-2017/009125
- WO-A1-2017/097662
- DE-A1- 10 057 950
- US-A1- 2003 209 381

## Beschreibung

Die vorliegende Erfindung betrifft eine Lenksäule für ein Steer-by-Wire Lenksystem eines Kraftfahrzeugs, umfassend eine mit einem Lenkrad verbindbare Lenkwelle, die in einer Manteleinheit um eine Längsachse drehbar gelagert ist, wobei ein Feedback-Aktuator vorgesehen ist, der mit der Lenkwelle wirkmäßig gekoppelt ist, wobei die Manteleinheit eine Länge L2 in Richtung der Längsachse aufweist und die Lenkwelle um eine Länge L1 in die Manteleinheit hineinragt, wobei die Länge L1 kleiner ist als die Länge L2, wobei der Feedback-Aktuator ein Antriebsmittel zum Antreiben der Lenkwelle aufweist, wobei das Antriebsmittel in einem zusammengebauten Zustand der Lenksäule außerhalb der Manteleinheit angeordnet istund wobei der Feedback-Aktuator ein Getriebe zum wirkmäßigen Verbinden des Antriebsmittels mit der Lenkwelle umfasst.

Ferner betrifft die vorliegende Erfindung ein Steer-by-Wire Lenksystem.

Bei Steer-by-Wire Lenksystemen ist im Gegensatz zu konventionellen Lenksystemen eine mechanische Zwangskopplung zwischen einem Lenkrad und einem Lenkgetriebe aufgehoben. Die von einem Fahrzeuglenker in das Lenkrad eingeleitete Lenkbewegung wird bei Steer-by-Wire Lenksystemen von einem Sensor erfasst, sodann von einer Steuerung verarbeitet und schließlich von einem Stellantrieb in Abhängigkeit von einem entsprechenden Steuersignal in einen Lenkwinkel eines gelenkten Rades umgesetzt. Mittels eines Feedback-Aktuators werden eine Kraft und damit ein Lenkmoment auf das Lenkrad aufgeprägt, um die für ein sicheres Fahren erforderlichen Betätigungskräfte und Reaktionskräfte im Sinne einer konventionellen Lenkung zu simulieren.

Das genannte Steer-by-Wire Lenksystem umfasst typischerweise eine Lenksäule der eingangs genannten Art, welche in einer Vielzahl von Ausgestaltungsformen bekannt ist. Allgemein üblich sind dabei Lenksäulen, in denen eine Lenkwelle drehbar in einem Mantelrohr gelagert ist. Das Mantelrohr ist selbst axial verstellbar gelagert, insbesondere kann das Mantelrohr in einem zweiten, ebenfalls axial verstellbar gelagerten, sogenannten Zwischenmantelrohr axial verstellbar gelagert sein, wonach die genannten Mantelrohre teleskopierbar axial verstellbar gegenüber einem sogenannten äußeren Mantelrohr gelagert sind, wobei das äußere Mantelrohr an einer fahrzeugseitig zu befestigenden Konsole schwenkbar gelagert ist, um eine Höhenverstellung der Lenkwelle zu ermöglichen. Für die beschriebene axiale Verstellung und die beschriebene Höhenverstellung ist typischerweise ein motorisch betriebener Stellantrieb vorgesehen, insbesondere jeweils ein Spindelantrieb.

In einem zusammengebauten Zustand der Lenksäule der eingangs genannten Art lässt sich die Lenkwelle, insbesondere wenn es als Lenkwelle ausgeformt ist, von einem Fahrzeuglenker wie bei einem konventionellen Lenksystem, also einem Lenksystem, bei dem die Lenkwelle mechanisch mit einer Fahrzeuglenkung gekoppelt ist, also eine Kopplung zwischen Spurstangen und der Lenkwelle, von einem Fahrzeuglenker bedienen, wobei das Bauteil dabei vorzugsweise als inneres Mantelrohr und die Lenkwelle vorzugsweise als Lenkwelle ausgestaltet ist, so dass die Lenkwelle in einem zusammengebauten Zustand in axialer Richtung durchgehend in dem Mantelrohr angeordnet ist.

Die Lenkwelle ist dabei insbesondere derart ausgestaltet, dass es mit einem Feedback-Aktuator an einem von dem Fahrzeuglenker beabstandeten Abschnitt gekoppelt werden kann. Der Feedback-Aktuator kann dabei ein Antriebsmittel, insbesondere einen Elektromotor, aufweisen, über den die Lenkwelle über ein Übertragungselement angetrieben wird, so dass entsprechende Reaktions- und Betätigungskräfte an der Lenkwelle bereitgestellt werden.

Eine Lenksäule der eingangs genannten Art ist zum Beispiel aus der DE 10 2015 007 280 A1 bekannt. Dort ist eine Lenkwelle mit einem Handmomentensteller verbunden, wobei die Lenkwelle in einem Mantelrohr drehbar gelagert ist.

Aus der DE 10 2015 210 528 A1 ist eine Lenkeinrichtung mit einem Feedback-Aktuator bekannt.

Aus der CN 10 800 1523 A ist ein Getriebe zur automatischen Steuerung einer Lenkwelle bekannt, wobei das Getriebe als Riemengetriebe ausgestaltet ist.

Aus der US 2003/209381 A1 ist eine Lenksäule der eingangs genannten Art bekannt.

Ein Nachteil des Stands der Technik äußert sich aber darin, dass die eingangs genannte Lenksäule typischerweise eine hohe Masse aufweist und dass eine Lenksäule der eingangs genannten Art ein relatives großes Bauraumvolumen einnimmt.

Aufgabe der vorliegenden Erfindung ist es daher, eine Lenksäule für ein Kraftfahrzeug bereitzustellen, die einen kompakten, platzsparen Aufbau aufweist und gleichzeitig eine geringe Masse aufweist.

Gelöst wird die Aufgabe durch die Merkmale des Patentanspruchs 1. Vorteilhafte Weiterbildungen ergeben sich aus den Unteransprüchen.

Die Aufgabe wird hinsichtlich der Lenksäule dadurch gelöst, dass die Manteleinheit mindestens eine Ausnehmung aufweist, wobei die Lenkwelle über die Ausnehmung für ein Übertragungselement des Getriebes zugänglich ist.

Bei der erfindungsgemäßen Lenksäule ist der Feedback-Aktuator zum Bereitstellen einer Lenkkraft an einen Fahrzeuglenker beim Bedienen der Lenkwelle ausgestaltet. Nach dieser Maßnahme dient der Feedback-Aktuator insbesondere dazu, ein realistisches Lenkgefühl beim Fahrzeuglenker während des Bedienens der Lenkwelle zu erzeugen, weil es insbesondere nach einer Montage der Lenksäule nach der Erfindung in dem Steer-by-Wire Lenksystem keine mechanische Kopplung zwischen der Lenkwelle, und den Rädern eines Fahrzeuges und damit den Spurstangen und damit einer Zahnstange zur schwenkenden Bewegung der Spurstangen und damit mit einem mit der Zahnstange im Eingriff stehenden Ritzel gegeben ist. Hierbei ergibt sich insbesondere ein Synergieeffekt mit den genannten Ungleichungen bzw. Relationen zwischen L1 und L2, da der Feedback- Aktuator in einem montierten Zustand der Lenksäule in dem Steer-by-Wire Lenksystem gegenüber Lenksäulen aus dem Stand der Technik deutlich näher an dem Fahrzeuglenker positioniert werden kann, insbesondere in der Nähe der Schnittstelle zwischen der Lenkwelle und einem Lenkrad, welches wirkmäßig mit der Lenkwelle verbunden ist oder verbindbar ausgestaltet ist. Durch diese Maßnahme wird das Bauraumvolumen der Lenksäule noch weiter in vorteilhafterweise reduziert und die konstruktive Gestaltungsfreiheit bezüglich einer Auslegung der Lenksäule und damit des Steer-by-Wire Lenksystems weiter erhöht.

Bei der erfindungsgemäßen Lenksäule weist der der Feedback-Aktuator ein Antriebsmittel zum Antreiben der Lenkwelle auf, wobei das Antriebsmittel in einem zusammengebauten Zustand der Lenksäule außerhalb der Manteleinheit angeordnet ist. Bei dem Antriebsmittel kann es sich zum Beispiel um einen Elektromotor handeln, welcher insbesondere eine Abtriebswelle aufweist, so dass durch eine Übertragung eines der Abtriebswelle zuordenbaren Drehmoments an die Lenkwelle je nach ermittelter Wechselwirkung, insbesondere zwischen Rädern des Steer-by-Wire Lenksystems und einer Straße, und/oder weiteren Fahrzeugzuständen, wie beispielsweise Fahrzeuggeschwindigkeit, insbesondere Kurvengeschwindigkeit, und eines Verstellwinkels der genannten Räder und/oder der Spurstangen und/oder einer Zahnstange und/oder eines an einer weiteren Lenkwelle anliegenden Drehmoments und/oder eines Verformungszustandes eines weiteren Bauteils der Lenksäule, die Lenkwelle entsprechend angetrieben wird, so dass insbesondere eine von dem Fahrzeuglenker aufgebrachte Lenkbewegung durch eine durch das Antriebsmittel aufgebrachte, weitere Lenkbewegung in Richtung der von dem Fahrzeuglenker aufgebrachten Lenkbewegung oder in eine entsprechend entgegengesetzte Richtung überlagert wird.

Dabei ist in einem zusammengebauten Zustand der erfindungsgemäßen Lenksäule das Antriebsmittel, insbesondere wenn es als Elektromotor ausgestaltet ist, außerhalb der Manteleinheit angeordnet, wobei es sich bei der Manteleinheit insbesondere um ein Mantelrohr handeln kann, in welchem die Lenkwelle drehbar gelagert ist.

Bei der Lenksäule umfasst der Feedback-Aktuator ein Getriebe zum wirkmäßigen Verbinden des Antriebsmittels mit der Lenkwelle. Danach lässt sich in besonders vorteilhafterweise ein von dem Antriebsmittel z.B. bereitgestelltes Drehmoment insbesondere in ein zweites Drehmoment zur Simulation eines realistischen Fahrgefühls umwandeln, welches sodann an der Lenkwelle anliegt. Darüber hinaus lässt sich danach in besonders vorteilhafterweise das genannte Drehmoment des Antriebsmittels im Falle einer beabstandeten Anordnung zwischen der Lenkwelle und dem Antriebsmittel, insbesondere wenn das Antriebsmittel in einem angetriebenen Zustand außerhalb der Manteleinheit angeordnet ist, insbesondere wenn die Manteleinheit als Mantelrohr ausgestaltet ist und die Lenkwelle in der Manteleinheit drehbar gelagert ist, übertragen.

Erfindungsgemäß weist die Manteleinheit mindestens eine Ausnehmung auf, wobei die Lenkwelle über die Ausnehmung für ein Übertragungselement des Getriebes zugänglich ist. Bei der Ausnehmung kann es sich insbesondere, wenn die Manteleinheit einen Hohlraum aufweist, insbesondere eine oder mehrere schlitzförmige Öffnungen, durch welche das Übertragungselement, also beispielsweise ein Riemen oder ein Zahnrad des entsprechenden Getriebes, in das Mantelrohr derart hineinragt, dass die in dem Mantelrohr gelagerte Lenkwelle über das Übertragungselement von dem Antriebsmittel angetrieben werden kann. Daran ist vorteilhaft, dass das Antriebsmittel, insbesondere wenn es als Elektromotor mit einer Abtriebswelle ausgestaltet ist, an nahezu einer beliebigen Stelle der Lenksäule in eine wirkmäßige Verbindung zum Antreiben der Lenkwelle gebracht werden kann, und zwar insbesondere bezüglich der Manteleinheit, insbesondere wenn sie als Mantelrohr ausgestaltet ist. Somit kann die Manteleinheit kompakter ausgebildet sein, dass das Antriebsmittel außerhalb der Manteleinheit angeordnet ist und somit die Manteleinheit nicht als Gehäuse für das Antriebsmittel dient. Somit kann dank dieser Maßnahme die Masse und der Bauraum der Lenksäule weiter reduziert werden.

Die Lenkwelle in axialer Richtung ist kürzer als das Mantelrohr in axialer Richtung. Somit ragt die Lenkwelle in die Manteleinheit hinein, wobei ein Ende der Lenkwelle zwischen den Enden der Manteleinheit in axialer Richtung angeordnet ist. Das andere Ende der Lenkwelle, welches nicht zwischen den Enden der Manteleinheit angeordnet ist, kann ausserhalb der Manteleinheit angeordnet sein.

Die Lenkwelle ragt in die Manteleinheit hinein, mit anderen Worten erstreckt sich die Lenkwelle in die Manteleinheit entlang der Längsachse in die Manteleinheit hinein.

Die axiale Richtung ist gleichbedeutend mit der Richtung der Längsachse.

Bevorzugt kann die Manteleinheit ein Mantelrohr umfassen. Das Mantelrohr kann beispielsweise als ein integrales Bauteil ausgebildet sein.

Weiters kann die Manteleinheit in einer bevorzugten Ausführungsform in einem gegenüber einem Fahrzeugchassis axial fixierten äußeren Mantelrohr aufgenommen sein. Ebenfalls ist es denkbar und möglich, dass mindestens ein weiteres, gegenüber dem äußeren Mantelrohr axial beweglich gelagertes Zwischenmantelrohr vorgesehen ist, wobei die Manteleinheit in dem Zwischenmantelrohr axial verschiebbar aufgenommen ist.

Die Manteleinheit weist einen Innendurchmesser bezüglich eines von ihm radial umschlossenen Hohlraums auf. Der Hohlraum ist zum Beispiel zylindrisch oder zumindest im Wesentlichen zylindrisch.

Die Manteleinheit weist bevorzugt einen Lagerabschnitt auf, in und/oder an welchem die Lenkwelle drehbar gelagert ist. Bevorzugt ist in der Manteleinheit ein Lager, bevorzugt ein Gleitlager oder ein Wälzlager aufgenommen, in dem die Lenkwelle drehbar gelagert ist.

Die Manteleinheit ist vorzugsweise mit dem Fahrzeug direkt oder indirekt, insbesondere über eine Konsole verbindbar. Bevorzugt ist die Manteleinheit als Mantelrohr ausgebildet oder weist ein solches auf, wobei die Manteleinheit besonders bevorzugt in einem Außenmantel, auch als äußeres Mantelrohr bezeichnet, verschiebbar aufgenommen ist,

Die Länge L1 ist vorzugsweise eine Länge in axialer Richtung, um die die Lenkwelle in die Manteleinheit hineinragt. L2 ist vorzugsweise die maximale axiale Länge der Manteleinheit. Vorzugsweise sind L1 und L2 entlang paralleler Richtungen definierbar. Vorzugweise entspricht L2 der kürzesten Strecke von einem ersten Ende der Manteleinheit zu einem zweiten Ende der Manteleinheit. Vorzugsweise sind das erste und das zweite Ende der Manteleinheit jeweils durch Stirnflächen der Manteleinheit definiert, insbesondere Stirnflächen eines Mantelrohrs.

Vorzugsweise entspricht L1 einer Teilstrecke einer Gesamtstrecke der Lenkwelle, die sich von einem ersten Ende der Lenkwelle zu einem zweiten Ende der Lenkwelle erstreckt. Vorzugsweise sind das erste und das zweite Ende der Lenkwelle jeweils durch Stirnflächen der Lenkwelle definiert.

Vorzugsweise sind die orthogonalen Projektionen von L1 und L2 zusammenfallend.

Vorzugsweise ist die Manteleinheit als Innenmantelrohr ausgestaltet, welches verschiebbar in einem von der erfindungsgemäßen Lenksäule umfassten Außenmantelrohr aufgenommen ist. Besonders bevorzugt ist zwischen dem Innenmantelrohr und dem Außenmantelrohr ein Zwischenmantelrohr angeordnet, welches ebenfalls von der erfindungsgemäßen Lenksäule umfasst ist, so dass nach dieser Maßnahme insbesondere eine axial teleskopierbare Mantelrohranordnung bereitgestellt ist, wobei in besonders vorteilhafterweise eine entsprechend teleskopierbare Ausgestaltung der Lenkwelle dank der erfindungsgemäßen Lehre vermieden werden kann. Dabei ist es insbesondere vorteilhaft, wenn die erfindungsgemäße Lenksäule verstellbar ist, insbesondere mittels eines motorischen Antriebs, insbesondere bezüglich einer axialen Verstellung des Mantelrohrs und/oder einer verschwenkbaren Verstellung des Mantelrohrs gegenüber einer Konsoleneinheit, an und/oder in der das Mantelrohr schwenkbar gelagert ist. In vorteilhafterweise ist die erfindungsgemäße Lenksäule durch diese Maßnahmen kostengünstig und gewichtssparend herstellbar.

Dadurch, dass die Länge L1 kleiner ist als die Länge L2 ist das Bauraumvolumen und die Masse der erfindungsgemäßen Lenksäule reduziert. Die Lenkwelle ragt nur noch in einem relativ kleinen Abschnitt der Manteleinheit hinein, wonach durch eine entsprechend kurze Lenkwelle Masse und Bauvolumen eingespart wird. Zudem wird die konstruktive Gestaltungsfreiheit erhöht, indem zum Beispiel der Feedback-Aktuator je nach Länge der Lenkwelle entlang der Lenksäule montiert werden kann. Ein weiterer Vorteil äußert sich darin, dass sich der Feedback-Aktuator gegenüber dem Stand der Technik erheblich dichter an einem mit der Lenkwelle wirkmäßig verbundenen Lenkrad montieren lässt. Unter dem Aspekt einer teleskopierbaren Lenksäule, also zum Beispiel einer Lenksäule, bei der zum Beispiel ein inneres Mantelrohr in einem Zwischenmantelrohr axial verstellbar gelagert ist, wobei das Zwischenmantelrohr in einem Außenmantelrohr axial verstellbar gelagert ist, wird dank der erfindungsgemäßen Lehre mit Vorteil vermieden, dass die Lenkwelle aus mehreren, gegeneinander axial verstellbaren Elementen zusammengesetzt ist, welche sich im Sinne der genannten Mantelrohre ebenfalls teleskopierbar auseinander- und wieder zusammenziehen lassen müssten. Mit Abmessung ist insbesondere eine äußere Abmessung der Manteleinheit und der Lenkwelle gemeint. Mit Abmessung ist insbesondere eine maximale äußere Abmessung des Bauteils und der Lenkwelle gemeint. Mit der Bewegungsachse ist insbesondere eine gedachte Drehachse der Lenkwelle gemeint, also insbesondere der Längsachse der Lenkwelle.

Nach einer vorteilhaften Ausführungsform der erfindungsgemäßen Lenksäule ist die Länge L1 kleiner oder gleich der Hälfte der Länge L2. Insbesondere gilt danach zum Beispiel L1 = 0,5 · L2, L1 = 0,4 · L2, L1 = 0,3 · L2, L1 = 0,2 · L2 oder L1 = 0,1 · L2. Diese Maßnahme führt zu einer noch weiteren Reduzierung des Bauraumvolumens und des Gewichts.

In einer weiteren vorteilhaften Ausführungsform der erfindungsgemäßen Lenksäule ist das Getriebe als Umschlingungsgetriebe ausgestaltet. Nach dieser Maßnahme ist das Umschlingungsgetriebe insbesondere als Riemengetriebe ausgestaltet, zum Beispiel mit einer auf der genannten Abtriebswelle befestigten ersten Riemenscheibe, einer auf der Lenkwelle montierten zweiten Riemenscheibe und einem die erste und die zweite Riemenscheibe umschlingenden Riemen, insbesondere einem Zahnriemen oder einem Flachriemen oder einen Keilriemen, wobei die erste und die zweite Riemenscheibe der Geometrie des Riemens entsprechend ausgebildet sind. In vorteilhafterweise lässt sich danach durch eine relativ einfache Maßnahme die Lenkwelle bauraumvolumensparend antreiben.

In einer weiteren vorteilhaften Ausführungsform der erfindungsgemäßen Lenksäule ist das Getriebe als Zahnradgetriebe ausgestaltet. Daran ist vorteilhaft, dass durch diese Maßnahmen eine besonders präzise Übertragung eines von dem Antriebsmittel, insbesondere wenn es als Elektromotor ausgestaltet ist, bereitgestellten Drehmoments auf die Lenkwelle realisierbar ist. Als Zahnradgetriebe kommt dabei ein ein- oder mehrstufiges Stirnradgetriebe in Betracht, wobei im Falle eines einstufigen Getriebes ein erstes Zahnrad auf der Abtriebswelle des Elektromotors befestigt ist und ein zweites Zahnrad auf der Lenkwelle befestigt ist, wobei das erste Zahnrad mit dem zweiten Zahnrad im kämmenden Eingriff steht. Bevorzugt kann eine Geradverzahnung oder eine Schrägverzahnung zum Einsatz kommen.

In einer weiteren vorteilhaften Ausführungsform der erfindungsgemäßen Lenksäule weist die Manteleinheit mindestens eine Ausnehmung auf, wobei die Lenkwelle über die Ausnehmung für ein Übertragungselement des Getriebes zugänglich ist. Bei der Ausnehmung kann es sich insbesondere, wenn die Manteleinheit einen Hohlraum aufweist, insbesondere eine oder mehrere schlitzförmige Öffnungen, durch welche das Übertragungselement, also beispielsweise ein Riemen oder ein Zahnrad des entsprechenden Getriebes, in das Mantelrohr derart hineinragt, dass die in dem Mantelrohr gelagerte Lenkwelle über das Übertragungselement von dem Antriebsmittel angetrieben werden kann. Daran ist vorteilhaft, dass das Antriebsmittel, insbesondere wenn es als Elektromotor mit einer Abtriebswelle ausgestaltet ist, an nahezu einer beliebigen Stelle der Lenksäule in eine wirkmäßige Verbindung zum Antreiben der Lenkwelle gebracht werden kann, und zwar insbesondere bezüglich der Manteleinheit, insbesondere, wenn sie als Mantelrohr ausgestaltet ist. Somit kann die Manteleinheit kompakter ausgebildet sein, dass das Antriebsmittel außerhalb der Manteleinheit angeordnet ist und somit die Manteleinheit nicht als Gehäuse für das Antriebsmittel dient. Somit kann dank dieser Maßnahme die Masse und der Bauraum der Lenksäule weiter reduziert werden.

In einer weiteren vorteilhaften Ausführungsform ist die Lenkwelle in mindestens einem Abschnitt als Vollwelle ausgestaltet. Dies ist unter dem Aspekt einer Kostenersparnis vorteilhaft, weil es sich bei einer Vollwelle bzw. einem entsprechenden Abschnitt der Lenkwelle um eine besonders einfache Maßnahme handelt und Vollwellen kompakt ausgeführt werden können. Darüber hinaus erlaubt die Ausgestaltung als Vollwelle in einem Abschnitt, dass die Lenkwelle in vorteilhafterweise zum wirkmäßigen Verbinden mit dem Antriebsmittel ausgestaltet werden kann, insbesondere indem an dem als Vollwelle ausgestalteten Abschnitt der Lenkwelle ein Getrieberad und/oder ein Scheibenrad eines Riemenantriebs angeordnet werden kann unter Zuhilfenahme von Befestigungsmitteln oder Maßnahmen, wie beispielsweise einer Nut-Feder-Verbindung, einer Schweißverbindung, einer Schraubenverbindung, einer formschlüssigen Verbindung, insbesondere durch Wärmeschrumpfung oder durch einfaches Aufpressen. In einer vorteilhaften Weiterbildung kann die Lenkwelle und das Getrieberad und/oder ein Scheibenrad eines Riemenantriebs als einstückiges integrales Bauteil ausgebildet sein.

In einer alternativen vorteilhaften Ausführungsform ist die Lenkwelle als Hohlwelle ausgebildet. Dank dieser Maßnahme lässt sich die Masse der Lenksäule weiter verringern.

Die Aufgabe wird hinsichtlich des Steer-by-Wire Lenksystems dadurch gelöst, dass sie eine Lenksäule nach einem der beigefügten Ansprüche und/oder der hier offenbarten Ausführungsformen aufweist, wobei die Manteleinheit ein Mantelrohr aufweist und die Lenkwelle in dem Mantelrohr um eine Drehachse gelagert und in das Mantelrohr hineinragend ist. Dies ist vorteilhaft, weil nach dieser Maßnahme ein gegenüber dem Stand der Technik kompaktes sowie gewichtssparende Steer-by-Wire Lenksystem bereitgestellt wird. Die Lenkwelle ragt dabei in das Mantelrohr hinein. In besonders vorteilhafterweise umfasst die Lenksäule dabei den Feedback-Aktuator mit dem Antriebsmittel und dem Getriebe, wobei das Antriebsmittel als Elektromotor ausgestaltet ist, der außerhalb des Mantelrohrs angeordnet ist und wobei das Mantelrohr mindestens eine Ausnehmung aufweist, über die Lenkwelle dem Riemen eines Riemenantriebs oder dem Zahnrad eines Zahngetriebes zugänglich ist, so dass die Lenkwelle von dem Riemen umschlungen wird bzw. im Eingriff mit dem Zahnrad steht, so dass die Lenkwelle durch den Elektromotor zur Bereitstellung von Lenkreaktionskräften an den Fahrzeuglenker verbunden ist.

Ausführungsbeispiele der Erfindung werden nachfolgend anhand der Zeichnungen näher erläutert. Funktionsmäßig gleiche Teile sind dabei mit denselben Bezugszeichen versehen. Die Figuren der Zeichnungen zeigen im Einzelnen:
- Figur 1:: eine schematische Darstellung eines Steer-by-Wire Lenksystems mit einer Lenksäule nach der Erfindung nach einer ersten Ausführungsform;
- Figur 2:: die Lenksäule gemäß Figur 1 in einer perspektivischen Ansicht;
- Figur 3:: die Lenksäule gemäß Figur 1 in einem Längsschnitt;
- Figur 4:: die Lenksäule gemäß Figur 1 in einem Querschnitt mit Blickrichtung entlang des Pfeils IV aus Figur 3;
- Figur 5:: die Lenksäule gemäß Figur 1 in einer weiteren perspektivischen Ansicht;
- Figur 6:: einen Abschnitt einer erfindungsgemäßen Lenksäule nach einer zweiten Ausführungsform im Längsschnitt analog zur Figur 3;
- Figur 7:: einen Abschnitt einer erfindungsgemäßen Lenksäule nach einer dritten Ausführungsform im Längsschnitt analog zur Figur 3
- Figur 8:: Lenksäule ähnlich der Figur 3 in einem Längsschnitt.

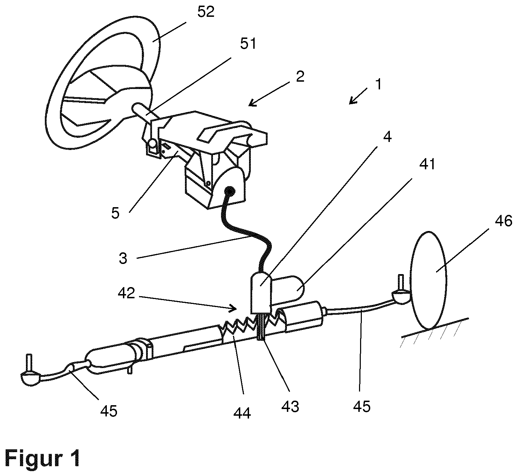

Figur 1 zeigt schematisch ein Steer-by-Wire Lenksystem 1, welches eine Lenksäule 2 umfasst, die über eine elektrische Leitung 3 mit einem elektrischen Lenkungsantrieb 4 verbunden ist. Der Lenkungsantrieb 4 umfasst einen mit der elektrischen Lenkung 3 verbundenen elektrischen Stellmotor 41, der ein Lenkungsstellmoment in ein Lenkgetriebe 42 einleitet. Dort wird das Lenkungsstellmoment über ein Ritzel 43 in eine Zahnstange 44 in eine Translationsbewegung von Spurstangen 45 umgesetzt, wodurch ein Lenkeinschlag der gelenkten Räder 46 bewirkt wird. Die Lenksäule 2 umfasst eine Lenkwelle 51, an deren bezogen auf die Fahrtrichtung eines nicht dargestellten Fahrzeugs hinterem Ende ein Lenkrad 52 angebracht ist. Die Lenksäule 2 umfasst ferner ein äußeres Mantelrohr 5, in welchem die Lenkwelle 51 axial in Richtung der Längsachse der Lenkwelle 1 telekopierbar und dementsprechend entsprechend verschiebbar gelagert ist.

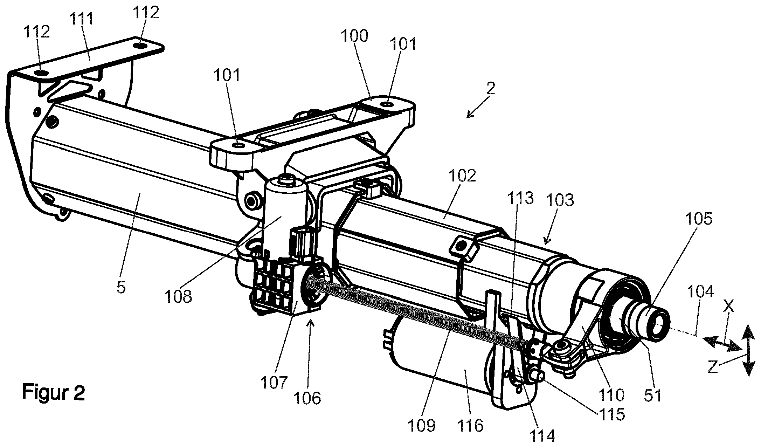

Figur 2 zeigt die Lenksäule 2 in schematisch-perspektivischer Ansicht von seitlich schräg oben auf das genannte hintere Ende. Die Lenksäule 2 umfasst eine Konsole 100, wobei die Konsole 100 Befestigungsmittel 101 zur Verbindung der Konsole 100 und damit der Lenksäule 2 mit einer nicht dargestellten Fahrzeugkarosserie aufweist. Von der Konsole 100 wird das äußere Mantelrohr 5 gehalten. In dem äußeren Mantelrohr 5 ist in Richtungen des Doppelpfeils X ein Zwischenmantelrohr 102 axial verschieblich angeordnet. In dem Zwischenmantelrohr 102 ist wiederum ein als Innenmantelrohr ausgebildete Manteleinheit 103 in Richtungen des Doppelpfeils X axial verschieblich angeordnet. In der Manteleinheit103 ist die Lenkwelle 51 um eine gedachte Drehachse 104 drehbar gelagert. Die Drehachse 104 entspricht der Längsachse der Lenkwelle 51. Die Lenkwelle 51 weist einen Befestigungsabschnitt 105 zur Befestigung des in Figur 2 nicht dargestellten Lenkrades 2 gemäß Figur 1 auf.

Demnach bilden das Außenmantelrohr 5, das Zwischenmantelrohr 102 und die Manteleinheit103 eine Mantelanordnung mit teleskopierbar angeordnetem Außenmantelrohr 5, Zwischenmantelrohr 102 und Manteleinheit103, so dass die Lenkwelle 51 in eine der Richtungen des Doppelpfeiles X in axial verschieblich ist. Die axiale Verschiebung des Zwischenmantelrohrs 102, der Manteleinheit103 und damit der Lenkwelle 51 wird mittels eines Spindelantriebs 106 realisiert. Der Spindelantrieb 106 umfasst ein Getriebegehäuse 107, in welchem eine hier nicht näher dargestellte Spindelmutter drehbar gelagert ist. Die Spindelmutter wird durch einen Elektromotor 108 mithilfe eines in Figur 2 nicht ersichtlichen Schneckengetriebes angetrieben, so dass über einen Eingriff der von dem Spindelantrieb 106 ebenfalls umfassten Gewindespindel 109 diese in eine translatorische Bewegung bei einem angetriebenen Zustand des Elektromotors 108 versetzt wird, so dass über eine Befestigung 110 der Gewindespindel 109 an der Manteleinheit 103 dieses und je nach einem ausgefahrenen Zustand der Manteleinheit 103 bzw. der Lenkwelle 51 das Zwischenmantelrohr 102 in einer der Richtungen des Doppelpfeils X translatorisch bewegt wird, je nach Antriebsrichtung der hier nicht ersichtlichen Spindelmutter. Das Außenmantelrohr 5 weist eine zweite Konsole 111 auf, wobei die zweite Konsole 111 Befestigungsmittel 112 an ihrem plattenförmigen Abschnitt aufweist, so dass das Außenmantelrohr 105 analog zu der Konsole 100 an einer Karosserie des hier nicht dargestellten Fahrzeugs befestigt werden kann.

Die Manteleinheit 103 weist zwei schlitzförmige Ausnehmungen 113 auf. Durch die schlitzförmigen Ausnehmungen 113 ist ein Flachriemen 114 geführt, so dass der Flachriemen 114 die Lenkwelle 51 und eine Abtriebswelle 115 eines Elektromotors 116 umschlingt, so dass in einem angetriebenen Zustand des Elektromotors 116 die Abtriebswelle 115 um die Drehachse 140 drehend ist, wenn der Flachriemen 114 durch den Elektromotor 116 angetrieben wird, so dass die Lenkwelle 51 zur Simulation von Lenk- und Reaktionskräften, wie sie typischerweise bei einer Lenkwelle auftreten würden, die mechanisch mit den Rädern eines Fahrzeugs gekoppelt ist, entsprechend angetrieben wird. Der Elektromotor 116, die Abtriebswelle 115, der Riemen 114 und die Riemenscheiben 120, die an der Lenkwelle 51 und der Abtriebswelle 115 befestigt sind, welche der Riemen 114 umschlingend ist, bilden einen Feedback-Aktuator, . Der Feedback-Aktuator kann auch als aus dem Elektromotor 116, der Abtriebswelle 115 und dem Riemen 114 gebildet betrachtet werden. Weiters kann der Feedback-Aktuator eine Steuereinheit zur Steuerung des Elektromotors 116 aufweisen, die mit dem Bordnetz des Fahrzeugs elektrisch gekoppelt ist. Aus Figur 2 ist ersichtlich, dass der Elektromotor 116 außerhalb der Manteleinheit 103 damit auch außerhalb der Lenkwelle 51 angeordnet ist. Über einen in Figur 2 nicht ersichtlichen zweiten Spindelantrieb ist das Außenmantelrohr 5 und damit das Zwischenmantelrohr 102 und damit die Manteleinheit 103 und damit die Lenkwelle 51 durch einen Verschwenkmechanismus, der durch eine entsprechend verschwenkbare Verbindung zwischen dem Außenmantelrohr 5 und der Konsole 100 gebildet ist, derart verschwenkbar, dass die genannten Bauteile in Richtungen des Doppelpfeils Z beweglich sind.

Aus Figur 2 ist ferner ersichtlich, dass der Elektromotor 116 über ein Montageelement 304 an der Manteleinheit 103 drehfest befestigt ist.

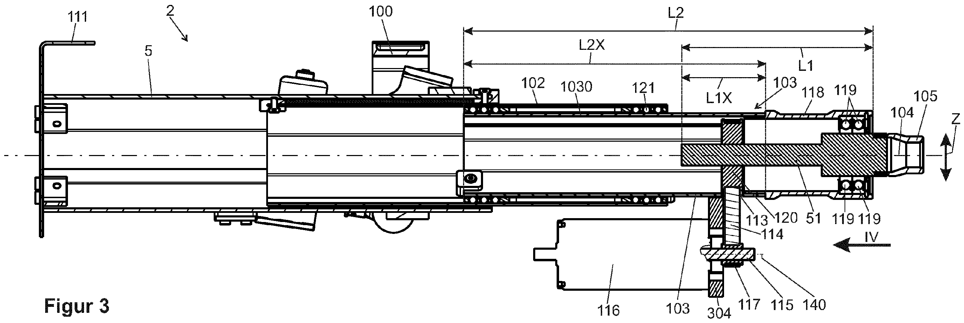

Figur 3 zeigt die erfindungsgemäße Lenksäule 2 in einem Längsschnitt entlang der Drehachse 104. In Figur 3 ist besonders gut ersichtlich, dass die Lenkwelle 51 in Richtung der Drehachse 104 kürzer ist als die als Innenmantelrohr ausgebildete Manteleinheit 103, so dass auf diese Weise eine kompakte und damit gewichtssparende Lenksäule 2 für ein Steer-by-Wire Lenksystem eines Kraftfahrzeugs bereitgestellt wird. Aus der Figur 3 ist ferner ersichtlich, dass in dieser Ausführung die Manteleinheit 103 ein Rohr 1030 und eine Lagerhülse 118 aufweist, die miteinander verbunden sind und die Manteleinheit 103 bilden, wobei die Lenkwelle 51 in der Lagerhülse 118 der Manteleinheit 103 durch Wälzlager 119 drehbar um die Drehachse 104 in der Manteleinheit103 gelagert ist. An dieser Stelle wird ausdrücklich festgehalten, dass die Lagerhülse 118 und das Rohr 1030 ein einstückiges Bauteil zur Bereitstellung der Manteleinheit 103bilden. Die Lagerhülse 118 und das Rohr 1030 können auch als einstückiges integrales Bauteil zur Bildung der Manteleinheit 103 ausgebildet sein. Aus Figur 3 ist ferner besonders gut ersichtlich, dass auf der Lenkwelle 51 eine Riemenscheibe 120 drehmomentenschlüssig montiert ist, welche von dem Riemen 114 umschlungen ist, und dass auf der Abtriebswelle 115 eine Riemenscheibe 117 montiert ist, die ebenfalls von dem Riemen 114 umschlungen wird, so dass die Lenkwelle 51 aufgrund ihrer durch die Wälzlager 119 gegebenen drehbaren Lagerung gegenüber der Manteleinheit 103 drehend antreibbar ist, wenn die Abtriebswelle 115 und damit die Riemenscheibe 117 durch den Elektromotor 108 angetrieben werden.

Die Wälzlager 119 sind bevorzugt so ausgebildet, dass diese ein Kippmoment aufnehmen können. Beispielsweise kann dies durch zwei Schrägkugellager erreicht werden, die entweder in X-Anordnung oder in O-Anordnung angeordnet sind. Alternativ kann ein X-Lager zum Einsatz kommen.

In einer alternativen, nicht dargestellten Ausführungsvariante kann es vorgesehen sein, dass zwei zueinander beabstandete Lager, bevorzugt Wälzlager oder Gleitlager, die Lenkwelle lagern, wobei zwischen den Lagern die Riemenscheibe bzw. ein anderes Getriebeglied wie ein Zahnrad angeordnet ist. In einem solchen Fall können bevorzugt Radialrillenkugellager oder Schrägkugellager zum Einsatz kommen. Alternativ können auch Rollenlager zum Einsatz kommen.

Aus Figur 3 ist ferner ersichtlich, dass die Manteleinheit103 in dem Zwischenmantelrohr 102 durch eine Wälzlagerung 121 zur Ausführung der beschriebenen Verstellbewegung in eine der Richtungen des Doppelpfeils X gelagert ist. Bei den entsprechenden Wälzkörpern handelt sich hier um Kugeln oder Zylinder. Alternativ kann jedoch auch eine Gleitlagerung zwischen dem Zwischenmantelrohr 102 und der Manteleinheit 103 vorgesehen sein.

Aus Figur 3 ist ferner ersichtlich, dass die Lenkwelle 51 um eine Länge L1 in die durch die Manteleinheit 103 hineinragt. Aus Figur 3 ist ferner ersichtlich, dass die Manteleinheit 103 ein Länge L2 aufweist, wobei die Länge L1 kleiner als die Länge L2 ist.

Aus Figur 3 ist darüber hinaus ohne weiteres ersichtlich, das die Lenkwelle 51 auch um eine um die Länge der Lagerhülse 118 verkürzte Länge L1X in das Rohr 1030 hineinragt, wobei das Rohr 1030 eine Länge L2X aufweist, wobei die Länge L1X kleiner als die Länge L2X ist.

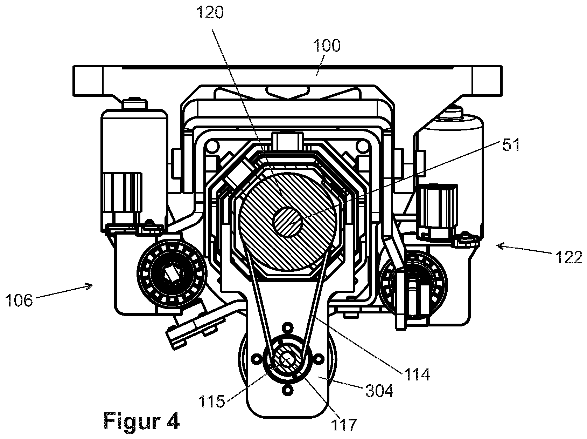

Figur 4 zeigt die Lenksäule 2 in einem Querschnitt mit Blickrichtung entlang des Pfeils IV aus Figur 3. Aus Figur 4 ist besonders gut ersichtlich, wie der Riemen 114 die Riemenscheibe 120 zum Antrieb der Lenkwelle 51 umschlingt und wie dieser ferner die Riemenscheibe 117, die sich auf der Abtriebswelle 115 in einem montierten Zustand befindet, umschlingt. Aus Figur 4 ist ferner ein Stellantrieb 122 ersichtlich, der für die beschriebene Höhenverstellung der genannten Mantelrohre 5, 102, und der Manteleinheit 103 bereitgestellt ist, wobei dieser analog zu dem Spindelantrieb 106 eine entsprechend antreibende Bewegung bereitstellt.

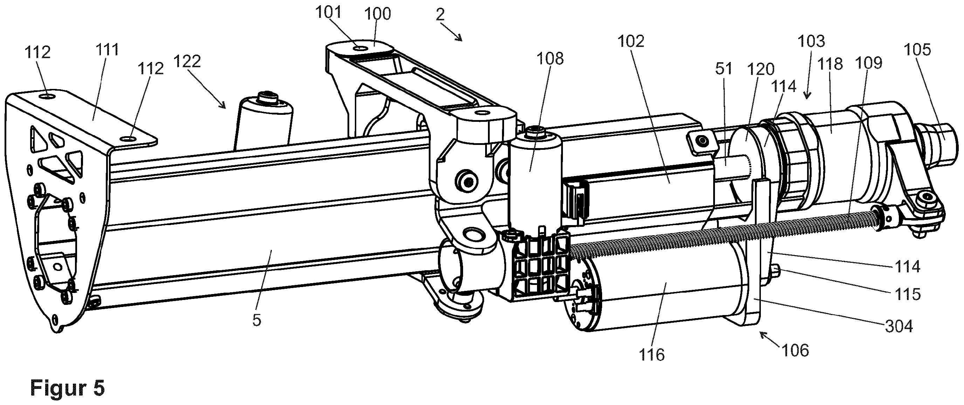

Figur 5 zeigt die Lenksäule 2 in einer weiteren perspektivischen Ansicht von schräg oben hinten. Die Lenksäule ist hier in einer teilweise unterbrochenen Ansicht dargestellt, und zwar im Bereich der Riemenscheibe 102. Das Rohr 1030 der Manteleinheit 103 ist hier aufgebrochen dargestellt, so dass die Riemenscheibe 120 und der entsprechende Riementrieb perspektivisch ersichtlich ist.

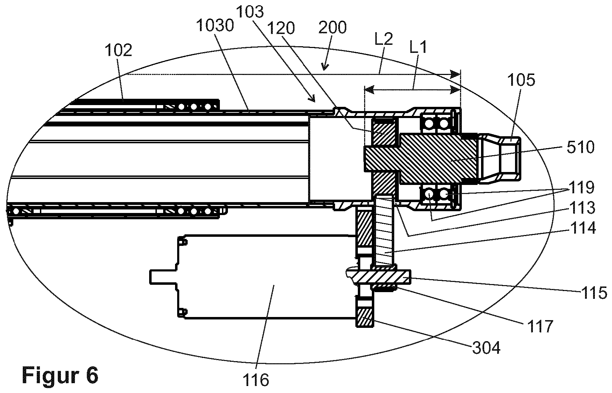

Aus Figur 6 ist ferner ersichtlich, dass die Lenkwelle 510 um eine Länge L1 in die Manteleinheit 103.

Figur 6 zeigt einen Abschnitt einer erfindungsgemäßen Lenksäule 200 nach einer zweiten Ausführungsform in einer Schnittdarstellung analog zu der aus Figur 3. Die Lenksäule 200 ist bis auf die Lenkwelle 510 und die Anordnung des Elektromotors 116, der Abtriebswelle 115 und der Riemenscheiben 117 und 120 analog zu der Lenksäule 2 ausgestaltet. Aus Figur 6 ist ersichtlich, dass die Lenkwelle 510 noch kürzer ausgestaltet ist als die Lenkwelle 51, so dass dementsprechend der geschilderte Antrieb der Lenkwelle 510 noch dichter an den Befestigungsabschnitt 105 angeordnet ist. Lenkwelle 510 ragt somit um eine Länge L1 in die Manteleinheit 103 hinein, wobei die Länge L1 geringer ist als die Länge L2 der Manteleinheit 103. Dies ist vorteilhaft, weil dadurch die Lenksäule 200 noch leichter ausgestaltet ist.

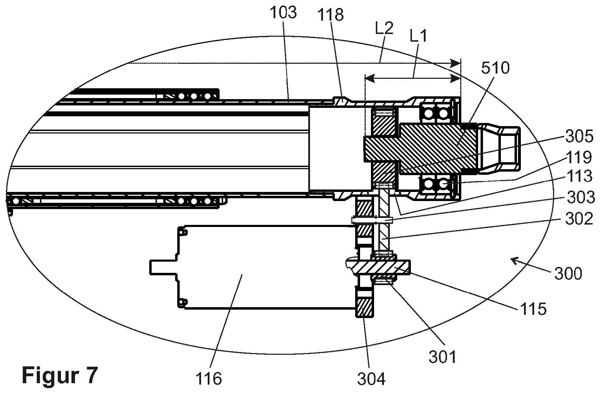

Figur 7 zeigt einen Abschnitt einer erfindungsgemäßen Lenksäule 300 nach einer dritten Ausführungsform in einer Darstellung analog zu Figur 3 oder 6, wobei die Lenksäule 300 analog zu der Lenksäule 200 ausgestaltet ist, bis auf, dass anstelle des bezüglich Figur 6 beschriebenen Riemenantriebs die Abtriebswelle 115 des Elektromotors 116 ein Stirnrad 301 aufweist, welches im kämmenden Eingriff mit einem Stirnrad 302 steht, welches über eine Achse 303 drehbar an dem Montageelement 304, an dem auch der Elektromotor 116 montiert ist, drehbar gelagert ist, wobei das Montageelement 304 mit der Lagerhülse 118 der Manteleinheit 103 wirkmäßig verbunden ist. Das Stirnrad 303 steht wiederum im kämmenden Eingriff mit einem Stirnrad 305, welches auf der Lenkwelle 510 angeordnet ist, so dass ein Zahnradgetriebe bereitgestellt ist, wobei das Stirnrad 303 in die Öffnung 113 hineinragt, um den beschriebenen Eingriff mit dem Stirnrad 305 zu bilden. Auf diese Weise wird ein alternativer Antrieb der Lenkwelle 510 und damit auch der Lenkwelle 51 bereitgestellt, so dass in einem betriebsgemäßen Zustand des Elektromotors 116 die Abtriebswelle 115 und damit das auf ihr angeordnete Stirnrad 310 angetrieben werden, welches wiederum das Stirnrad 300 antreibt, welches wiederum das Stirnrad 305 und damit die Lenkwelle 510 antreibt, so dass bei einer entsprechenden Steuerung des Elektromotors 116 an der Lenkwelle 510 zur Simulation eines Wechselwirkungszustandes zwischen Rädern und einer Straße Lenkreaktionskräfte bereitgestellt werden. Das Stirnrad 305 als Getriebeglied kann auch mit der Lenkwelle 510 als einstückig integrales Bauteil ausgebildet sein.

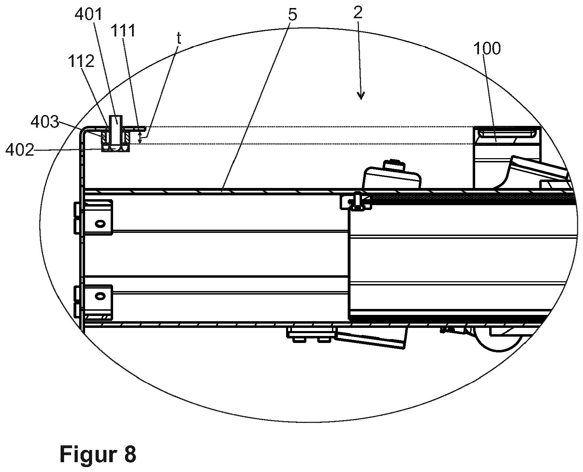

In der Figur 8 ist ein Ausschnitt einer Lenksäule 2 ähnlich der Lenksäule der Figur 3 in einem Längsschnitt dargestellt, wobei das Außenmantelrohr 5 eine zweite Konsole 111 aufweist, wobei die zweite Konsole 111 Befestigungsmittel 112 in Form von Bohrungen an ihrem plattenförmigen Abschnitt aufweist, so dass das Außenmantelrohr 105 analog zu der Konsole 100 an einer Karosserie des hier nicht dargestellten Fahrzeugs mittels Schrauben 401 befestigt werden kann. Die zweite Konsole 111 ist sowohl im Normalbetrieb als auch in einem Crashfall unverschiebbar gegenüber dem Fahrzeug. Um die Befestigung am Fahrzeug zu verbessern, kann zwischen dem Schraubenkopf 402 der Schraube 401 und der zweiten Konsole 111 eine Hülse 403 angeordnet sein, die als eine Unterlegscheibe wirkt und beim Verschrauben der zweiten Konsole 111 im Fahrzeug zwischen Schraubenkopf 402 und der zweiten Konsole 111 eingeklemmt wird. Die Dicke t der Hülse 403 ist so bemessen, dass die Schraube 401 entsprechend ihrer Schaftlänge und der Tiefe einer nicht dargestellten Gewindebohrung optimal eingeschraubt werden kann und die Konsole 111 an dem nicht gezeigten Fahrzeug fixiert werden kann. Bevorzugt ist die Dicke t der Hülse 403 so bemessen, dass die Dicke der zweiten Konsole 111 und die Dicke t der Hülse 403 der Dicke der ersten Konsole 100 entsprechen, so dass zur Fixierung der ersten Konsole 100 und der zweiten Konsole 111 identische Schrauben verwendet werden können. Durch diese Maßnahme können Kosten reduziert werden und ein Fehlverbau vermieden werden. Solche Hülsen dienen somit als Ausgleichselement. Weiters ist es denkbar und möglich, solche Hülsen bei unterschiedlichen Typen von Lenksäulen einzusetzen, so dass stets identische Schrauben bei der Fixierung der Lenksäule im Fahrzeug verwendet werden können. Die Hülse 403 kann sowohl aus einem metallischen Werkstoff wie Stahl oder Aluminium gebildet sein, oder aus einem nicht metallischen Werkstoff. Weiters kann die Hülse einen kreiszylindrischen als auch einen von der kreiszylindrischen Form abweichenden Querschnitt aufweisen.

Die zweite Konsole 111 kann bevorzugt als Blechbauteil ausgebildet sein. Es ist jedoch auch denkbar und möglich, dass die Konsole 111 als Gussbauteil oder aus einem Faserverbundwerkstoff gebildet ist.

Die Hülse 403 kann sowohl lose sein oder vor der Montage im Fahrzeug mittels einer Fügeoperation an der Konsole angebracht sein. Eine solche Hülse 403 und die Wahl der Dicke t kann auch bei Lenksäulen mit konventioneller Lenkwelle, die mit dem Lenkgetriebe wirkverbunden sind, zum Einsatz kommen, eingesetzt werden. Die Verwendung der Hülse 403 ist somit nicht auf Lenksäulen für ein Steer-by-Wire Lenksystem beschränkt. Solche Hülsen 403 können sowohl bei manuell-verstellbaren Lenksäulen als auch bei elektrisch-verstellbare Lenksäulen oder bei unverstellbaren Lenksäulen zum Einsatz kommen.

## Patentansprüche

1. Lenksäule (2, 200, 300) für ein Steer-by-Wire Lenksystem (1) eines Kraftfahrzeugs, umfassend eine mit einem Lenkrad verbindbare Lenkwelle (51, 510), die in einer Manteleinheit (103) um eine Längsachse (104) drehbar gelagert ist, wobei ein Feedback-Aktuator (114, 115, 116, 117, 120, 301, 302, 303, 305) vorgesehen ist, der mit der Lenkwelle (51, 510) wirkmäßig gekoppelt ist, wobei die Manteleinheit (103) eine Länge L2 in Richtung der Längsachse (104) aufweist und die Lenkwelle (51, 510) um eine Länge L1 in die Manteleinheit (103) hineinragt, wobei die Länge L1 kleiner ist als die Länge L2, wobei der Feedback-Aktuator (114, 115, 116, 117, 120, 301, 302, 303, 305) ein Antriebsmittel (116) zum Antreiben der Lenkwelle (51, 510) aufweist, wobei das Antriebsmittel (116) in einem zusammengebauten Zustand der Lenksäule außerhalb der Manteleinheit (103) angeordnet ist, und wobei der Feedback-Aktuator (114, 115, 116, 117, 120, 301, 302, 303, 305) ein Getriebe (114, 117, 120, 301, 302, 305) zum wirkmäßigen Verbinden des Antriebsmittels (116) mit der Lenkwelle (51, 510) umfasst, **dadurch gekennzeichnet, dass** die Manteleinheit (103) mindestens eine Ausnehmung (113) aufweist, wobei die Lenkwelle (51, 510) über die Ausnehmung (113) für ein Übertragungselement (114, 303) des Getriebes (114, 117, 120, 301, 302, 305) zugänglich ist.

2. Lenksäule Anspruch 1, **dadurch gekennzeichnet, dass** die Länge L1 kleiner oder gleich der Hälfte der Länge L2 ist.

3. Lenksäule nach einem der vorhergehenden Ansprüche, **dadurch gekennzeichnet, dass** der Feedback-Aktuator (114, 115, 116, 117, 120, 301, 302, 303, 305) zum Bereitstellen einer Lenkkraft an einen Fahrzeuglenker beim Bedienen der Lenkwelle (51, 510) ausgestaltet.

4. Lenksäule nach einem der vorhergehenden Ansprüche, **dadurch gekennzeichnet, dass** das Getriebe (114, 117, 120, 301, 302, 305) als Umschlingungsgetriebe (114, 117, 120) ausgestaltet ist.

5. Lenksäule nach einem der Ansprüche 1 bis 3, **dadurch gekennzeichnet, dass** das Getriebe (114, 117, 120, 301, 302, 305) als Zahnradgetriebe (301, 302, 305) ausgestaltet ist.

6. Lenksäule nach einem der vorhergehenden Ansprüche, **dadurch gekennzeichnet, dass** die Lenkwelle (51, 510) in mindestens einem Abschnitt als Vollwelle (51, 510) ausgeformt ist.

7. Steer-by-Wire Lenksystem (1), umfassend eine Lenksäule nach einem der vorhergehenden Ansprüche, wobei die Manteleinheit (103) ein Mantelrohr aufweist und die Lenkwelle (51, 510) in dem Mantelrohr um eine Drehachse (104) gelagert und in das Mantelrohr hineinragend ist.

## Claims

1. A steering column (2, 200, 300) for a steer-by-wire steering system (1) of a motor vehicle, comprising a steering shaft (51, 510) which can be connected to a steering wheel, which steering shaft is rotatably mounted about a longitudinal axis (104) in a casing unit (103), wherein a feedback actuator (114, 115, 116, 117, 120, 301, 302, 303, 305) is provided, which is operatively coupled to the steering shaft (51, 510), wherein the casing unit (103) has a length L2 in the direction of the longitudinal axis (104) and the steering shaft (51, 510) projects into the casing unit (103) by a length L1, wherein the length L1 is less than the length L2, wherein the feedback actuator (114, 115, 116, 117, 120, 301, 302, 303, 305) has a drive means (116) for driving the steering shaft (51, 510), wherein in an assembled state of the steering column the drive means (116) is arranged outside the casing unit (103), and wherein the feedback actuator (114, 115, 116, 117, 120, 301, 302, 303, 305) comprises a gearing (114, 117, 120, 301, 302, 305) for operatively connecting the drive means (116) to the steering shaft (51, 510), **characterized in that in that** the casing unit (103) has at least one recess (113), wherein the steering shaft (51, 510) is accessible via the recess (113) to a transmission element (114, 303) of the gearing (114, 117, 120, 301, 302, 305).

2. The steering column as claimed in claim 1, **characterized in that** the length L1 is less than or equal to half of the length L2.

3. The steering column as claimed in one of the preceding claims, **characterized in that** the feedback actuator (114, 115, 116, 117, 120, 301, 302, 303, 305) is designed to provide a steering force to a vehicle driver when operating the steering shaft (51, 510).

4. The steering column as claimed in one of the preceding claims, **characterized in that** the gearing (114, 117, 120, 301, 302, 305) is designed as a pulley drive (114, 117, 120).

5. The steering column as claimed in one of the claims 1 to 3, **characterized in that** the gearing (114, 117, 120, 301, 302, 305) is designed as a toothed gearing (301, 302, 305).

6. The steering column as claimed in one of the preceding claims, **characterized in that** the steering shaft (51, 510) is configured in at least one portion as a solid shaft (51, 510).

7. A steer-by-wire steering system (1) comprising a steering column as claimed in one of the preceding claims, wherein the casing unit (103) has a casing tube and the steering shaft (51, 510) is mounted in the casing tube about a rotational axis (104) and projects into the casing tube.

## Revendications

1. Colonne de direction (2, 200, 300) pour un système de direction à commande électrique (1) d'un véhicule automobile, comprenant un arbre de direction (51, 510) pouvant être relié à un volant de direction, qui est logé dans une unité d'enveloppe (103) de manière rotative autour d'un axe longitudinal (104), un actionneur à rétroaction (114, 115, 116, 117, 120, 301, 302, 303, 305) étant prévu, qui est couplé de manière opérationnelle à l'arbre de direction (51, 510), l'unité d'enveloppe (103) présentant une longueur L2 dans la direction de l'axe longitudinal (104) et l'arbre de direction (51, 510) faisant saillie d'une longueur L1 dans l'unité d'enveloppe (103), la longueur L1 étant inférieure à la longueur L2, l'actionneur à rétroaction (114, 115, 116, 117, 120, 301, 302, 303, 305) présentant un moyen d'entraînement (116) pour entraîner l'arbre de direction (51, 510), le moyen d'entraînement (116) étant agencé à l'extérieur de l'unité d'enveloppe (103) dans un état assemblé de l'arbre de direction, et l'actionneur à rétroaction (114, 115, 116, 117, 120, 301, 302, 303, 305) comprenant une transmission (114, 117, 120, 301, 302, 305) pour relier de manière opérationnelle le moyen d'entraînement (116) à l'arbre de direction (51, 510), **caractérisée en ce que** l'unité d'enveloppe (103) présente au moins un évidement (113), l'arbre de direction (51, 510) étant accessible par l'intermédiaire de l'évidement (113) pour un élément de transfert (114, 303) de la transmission (114, 117, 120, 301, 302, 305).

2. Colonne de direction selon la revendication 1, **caractérisée en ce que** la longueur L1 est inférieure ou égale à la moitié de la longueur L2.

3. Colonne de direction selon l'une quelconque des revendications précédentes, **caractérisé en ce que** l'actionneur à rétroaction (114, 115, 116, 117, 120, 301, 302, 303, 305) est conçu pour fournir une force de direction à un conducteur de véhicule lors de la commande de l'arbre de direction (51, 510).

4. Colonne de direction selon l'une quelconque des revendications précédentes, **caractérisé en ce que** la transmission (114, 117, 120, 301, 302, 305) est conçue sous forme de transmission à courroie (114, 117, 120).

5. Colonne de direction selon l'une quelconque des revendications 1 à 3, **caractérisée en ce que** la transmission (114, 117, 120, 301, 302, 305) est conçue sous forme de transmission à engrenages (301, 302, 305).

6. Colonne de direction selon l'une quelconque des revendications précédentes, **caractérisée en ce que** l'arbre de direction (51, 510) est formé dans au moins une section sous forme d'arbre plein (51, 510).

7. Système de direction à commande électrique (1), comprenant une colonne de direction selon l'une quelconque des revendications précédentes, l'unité d'enveloppe (103) présentant un tube d'enveloppe et l'arbre de direction (51, 510) étant logé dans le tube d'enveloppe autour d'un axe de rotation (104) et faisant saillie dans le tube d'enveloppe.
